# EUROPEAN PATENT APPLICATION

(11) **EP 1 469 483 A2**
(43) Date of publication of application: **20.10.2004**
(21) Application number: 04009089.6
(22) Date of filing: 16.04.2004
(51) Int. Cl.: G21K 1/00, H05H 3/04

(54) **Sample for manipulation by an optical tweezers, and a method and device to generate optically induced forces**

(30) Priority: 16.04.2003 DE 20306138 U; 17.10.2003 US 687788
(71) Applicant: Monajemsbashi, Shamci, Dr., 69126 Heidelberg (DE)
(72) Inventor: Monajemsbashi, Shamci, Dr., 69126 Heidelberg (DE)
(74) Representative: Heiland, Karsten, Dipl.-Ing.

(57) **Abstract**

A sample for manipulation by an optical tweezers comprising at least one auxiliary object linked to at least one target object. In one example, the auxiliary object includes chromophores such as haemoglobin or a haemoglobin derivate. The target object is manipulated where an optical tweezers is applied to the linked auxiliary object. A laser beam of the optical tweezers is coupled to a microscope for target object manipulation.

## Description

### BACKGROUND OF THE INVENTION

The invention concerns a sample, in particular for the manipulation by an optical tweezers, which contains one or more target objects plus one or more auxiliary objects, at least one auxiliary object being assigned to at least one target object. Besides that, the invention concerns a method to generate optically induced mechanical forces acting on elastic or deformable target objects by use of auxiliary objects. Finally, the invention also concerns a device to generate optical forces within the focus of an optical tweezers affecting elastic or deformable target objects, e.g. biological cells.

The mechanical deformation of cells can be used to determine visco-elastic parameters. As a couple of dynamic processes (growth, adhesion to substrate, migration, phagocytosis) are linked with a changed cellular visco-elasticity, valuable conclusions can be drawn from the mechanical properties of a cell regarding multiple vital parameters. The directed deformation of cells might be applied in investigations of diseases which are in connection with abnormalities of the cytoskeleton. The cytoskeletal constituent actin for example plays a vital role for the elasticity of most of the cells.

In addition, the method is suitable for investigations regarding the mechano-sensitivity as well as the mechano-transduction. Not only single cells, but cells within tissue are capable of reacting to intra- and extracellular forces (mechano-sensitivity) which induces a cascade of signals (mechano-transduction). This method is also suitable to investigate the significance of cellular mechano-sensors (e.g. cytoskeleton, mechanically controlled ion channels, integrins) including the role of signaling molecules (e.g. free intracellular calcium).

The methods having been used so far to mechanically manipulate cells can be subdivided into techniques with a multitude of cells and techniques with single cells. Techniques to manipulate a multitude of cells, e.g. the *membrane stretching* (Endlich N., Kress K. K., Reiser J., Uttenweiler D., Kritz W., Munel P., Endlich K. [2001] Podocytes respond to mechanical stress in vitro, J. Am. Soc. Nephrol. 12, 413-422) or the *Magnetic Manipulator Workstation* (Huang H., Dong C. Y., Kwon H.S., sutin J.D., Kamm R.D., So P. T. C. [2002] Three-dimensional cellular deformation analysis with a two-photon magnetic manipulator workstation. Biophys. J. 82, 2211-2223); transducing a force onto a multitude of cells at the same time, are not suitable to investigate individual cells, defined areas of cells or the reaction of close cells as a result of the mechano-transduction. Only experiments on single cells allow the differentiation between local and general effects.

The *optical stretcher* (Guck, J. Ananthakrishan R., Mahmood H., Moon T. J., Cunningham C. C., Kas, J. [2001] The optical stretcher: A novel laser tool to micromanipulate cells, Biophys. J. 81, 767-784), the double-beam optical tweezers (Henon, S., Lenormand, G., Richert A., Gallet, [1999] F. A new determination of the shear modulus of the human erythrocyte membrane using optical tweezers. Biophys. J. 76, 1145-1151) and the *micropipette aspiration technique* (Hochmuth, R. M. [2000] Micropipette aspiration of living cells J. Biochem. 33, 15-22) can only be used in investigations on cells in suspension, but are not feasible with adherent cells. All the methods which are based on the *Atomic Force Microscopy* (AFM)-technique such as the *Elastic Force Mapping* (Rotsch, C., Radmacher, [2000] M. drug-induced changes of cytoskeletal structure and mechanics in fibroblasts: An Atomic Force Microscopy study. Biophys.J. 78, 520-535) or the *AFM-indentation* (Guillaume T. Charras and Mike A. Horton (200). Single Cell Mechanotransduction and its modulation analyzed by atomic force microscope indentation. Biophysical Journal 82, 2970-2981) do not support a transmitted light microscopic assessment of a successful deformation, which would be necessary to be able to exclude any cell damage. Furthermore, fluorescence microscopic investigations are only possible using a combination of LSM (Laser Scanning Microscopy) and AFM. On the other hand, the application of magnetic manipulations is restricted to the investigation of adherent cells and relies on the uptake of magnetic beads by phagocytosis (Bausch A., Ziemann F., Boulbitch A.A., Jacobson K., Sackmann E. [1998]. Local measurement of viscoelastic parameters of adherent cell surfaces by magnetic bead microrheolometry, Biophys. J. 75, 2038-2049) or on a special coating of the magnetic beads to guarantee adhesion to the cell surface (Glogauer M., Ferrier J. [1998]. A new method for application of force to cells via ferric oxide beads, Eur J. Physiol. 435, 320-327).

### SUMMARY OF THE INVENTION

The invention is derived from the optically induced forces within an optical tweezers to transfer forces onto elastic/deformable objects. In the last couple of years the application of the optical tweezers has increased continually in biological and medical research. As the optical tweezers usually works with a focused laser beam (except the method by Käs), and the maximum force necessary to fix objects is concentrated within the beam focus which has a diameter of 1µm, it is hardly possible to exert big shear forces on biological membranes without any auxiliary device, e.g. latex beads. In the case of osteoblasts, as described by Walker L.M., Holm A., Cooline L., Maxwell L., Oberg A., Sundqvist T., El Haj A.J. [1999], Mechanical manipulation of bone and cartilage cells with optical tweezers, FEBS Letters 459, 39-42, the light pressure of the optical tweezers (7 pN) is sufficient to mechanically stimulate the cells. However, this is not the case for all types of cells, therefore cells cannot be manipulated mechanically by the optical tweezers alone in most experiments.

With regard to the latest technical developments the invention is based on the demand to indicate a sample, a device and an appropriate method to facilitate the mechanical manipulation of single cells in particular, and irrespective of their type and form.

In a sample according to the invention the auxiliary objects contain chromophores, for example porphyrin or protoporphyrin or haemoglobin or haemoglobin derivate or protein body like haemoglobin (such as myoglobin = muscle haemoglobin). It has been validated experimentally, that such auxiliary objects are extremely valuable for the manipulation by the optical tweezers especially with regard to the forces to be transferred. Preferably the auxiliary objects adhere to the target objects. One target object may be assigned to exactly one auxiliary object, or it may be in contact with several auxiliary objects.

It is another point of the invention to take into account the importance of the biconcave form of the auxiliary objects. It improves the connection between the auxiliary objects and target objects, especially the possibility of adhesion. Preferably the auxiliary objects are red blood cells (erythrocytes). Erythrocytes are suitable auxiliary objects to be held within the focus of an optical tweezers due to their optical properties. The erythrocytes are applied as "force-transferring-devices" onto the surface of the target cells. When exerting a force on the erythrocytes, they are moved resulting in the deformation of the adhering target objects.

It turned out that in this case the effect (optical enhancement of force by erythrocytes) is caused by the porphyrin or protoporphyrin. So called white erythrocytes i.e. erythrocytes deprived of the porphyrin dye behave as latex/polysterole beads pointing to a pivotal role of the porphyrin dye in optical deformation. This effect can be induced using other chromophores as well, e.g. the chlorophyll dye (green dye of chloroplasts). Thus, chloroplasts might be used instead of erythrocytes, but from a practical point of view it is advised to work with fixed erythrocytes (erythrocytes preparation is easier than protoplasts).

Chromophores such as haemoglobin or haemoglobin derivate or protein body like haemoglobin (such as Myoglobin = muscle haemoglobin) or chlorophyll containing liposomes/synthetic produced colloidal polymer microcapsules (such as Latex beads or Polystyrol beads) can be used as auxiliary objects, too.

It is still another object of the invention to coat the auxiliary objects with a substance, the surface charge (+/- sign) of which is opposite the surface charge (+/- sign) of the target objects. Therefore it is possible to use auxiliary objects having the same surface charge as the target objects. The surface charge is reversed due to coating with the substance described.

It is yet another object of the invention to use positively charged polymers, which do not show any reactive groups, as the intended substances. Preferably the substances are water-soluble polymers.

Due to a preferred form the auxiliary objects are coated with poly-ethylenimide or poly-L-lysine. Investigations have revealed that these substances are highly suitable.

As target objects biological cells are planned. These may adhere to a carrier, e.g. a cover slip, or find themselves in suspension. Possibly, fixed or native cells may be used as well. The auxiliary objects advantageously adhere upon the target objects which are fixed on the carrier.

A lot of times, the erythrocytes do not adhere to the target cell, because both membranes carry the same charge (negative). To achieve adherence of the red blood cells to the target cell, the erythrocytes are treated or coated with e.g. poly-ethylenimide. Other substances which contain free positive charges but no reactive groups may be applied as well. Such a substance may be poly-L-lysin which usually is coated onto glass (object slides) to enable cells to stick. It is possible to work with fixed erythrocytes (conserved using formaldehyde or glutaraldehyde) as well as with unfixed (native) ones. From a practical point of view it is advised to work with fixed erythrocytes (one single fixation step sufficient for a couple of experiments).

By applying membrane-surrounded sac / colloidal polymere microcapsules of chromophores (for example haemoglobin / haemoglobin derivate / protein body like haemoglobin / chlorophyll) a similar effect as in the case of the erythrocytes can be obtained.

It is therefore an object of the invention, that the auxiliary objects include or contain chromophores (haemoglobin / haemoglobin derivate / myoglobin / chlorophyll). Preferred auxiliary objects are red blood cells or other auxiliary objects containing chromophores (haemoglobin / haemoglobin derivate / myoglobin / chlorophyll) such as (special) liposomes and/ or colloidal polymer microcapsule. Round/biconcave/thorn apple form auxiliary objects can be also used.

According to a further aspect of the invention the auxiliary objects can include or contain chromophores except haemoglobin.

According to a further aspect of the invention the auxiliary objects can include or contain chromophores / porphyrin / protoporphyrin but are not erythrocytes.

It is of advantage to coat the auxiliary objects with substances prior to their application to the target objects. These substances change a surface charge resulting in surface charges with differing signs of the auxiliary object and of the target object.

That way the membrane of fixed/unfixed erythrocytes protoplasts and/or colloidal polymer microcapsule and/or liposomes may be coated by poly-ethylenimide or similar substances, such as poly-L-lysin or any other water soluble, positively charged polymers which do not possess any reactive groups. The surface charge of the membranes of the erythrocytes is switched from negative to positive.

It is also of advantage if the auxiliary objects adhere to the target objects. The adhesion is facilitated due to the coating described above or even guaranteed. This is valid especially in the case of erythrocytes and/or protoplasts and/ or colloidal _polymer microcapsule and/or liposomes being used as auxiliary objects and in the case of adherent cells or cells in suspension being used as target objects.

It is yet another object of the invention to provide a method to be able to deform/to stretch a target object to which an auxiliary object adheres by using two optical beams. In particular, cells in suspension will be deformed and stretched having attached at least one erythrocyte. An optical beam is acting onto the target object, while at the same time the other beam hits the auxiliary object. Due to a relative movement of the beams and/or a change in the focus the auxiliary object pulls/pushes the target object.

It is still another object of the invention to provide the coupling of a single or multiple laser beam of the optical tweezers into the beam passage of a microscope resulting in the pulling or pushing of the target object into the beam focus. It is intended to use biological cells as target objects. In particular, an EPI-fluorescence illumination path is preferred.

It is yet another object of the invention to couple a laser beam of long wavelength or the optical tweezers either in a direct way or by light guides via a system of lenses (optics to diverge the laser beam) into the microscope. A long wavelength means between 700 and 1100 nm.

The system of lenses preferably consists of two lenses. One of these lenses (a scattering lens) may be omitted, if the light is coupled via a light guide. The latter acts as a scattering lens due to its own characteristics. The second lens is accommodated to the characteristics of the light guide.

A further model of the device of the invention has optical elements to split up the laser beam and to form a multi beam tweezers. Preferably, galvanic mirrors are planned as optical elements,' which come into account following an optic for beam scattering. The galvanic mirrors are fit with a suitable motor being controlled by suitable software.

Preferably the microscope is a CLSM (Confocal Laser Scanning Microscope). That is, transmitted light and fluorescence microscopy can be performed simultaneously. For example, the mechanical behavior of biological cells as well as their mechanically controlled ion channels can be investigated simultaneously, too.

### In the following the invention will be explained with examples:

The erythrocytes coated with poly-ethylenimide (PEI) are applied upon the target cells and incubated for 10-20 min at 37°C. The cells are washed with fresh cell medium (RPMI) to remove non-adhering erythrocytes. Special buffers (containing calcium) are used for investigations of mechanically sensitive ion channels.

Different cells (cells of connective tissue, epithelial cells, pancreatic cells - adherent cells as well as cells in suspension) are pulled or pushed upon by the optical tweezers, the erythrocytes acting as force transducers. Very clearly, some deformation is detected microscopically but without any visible cell damage. In response to the mechanical stimulation all cells examined react with a dramatic increase of the intracellular calcium ion concentration. It is possible to work with fixed as well as with unfixed erythrocytes. The corresponding experiments using chloroplasts show the same or similar effects (results) like erythrocytes.

The corresponding experiments using differing, adherent cells under the same conditions but using latex beads or glass beads (sizes varying from 1µm, 5µm to 10µm) and lymphocytes at the same laser power show a negative result, i.e. no clearly visible deformation of the cell membrane. A minimal deformation of the cell membrane was detected only at remarkably higher laser power (five times).

This invention enables the deformation of adherent cells for several micrometers. Furthermore, it is possible to activate mechano-sensitive ion channels as proved by a very prominent increase of intracellular calcium following the deformation by the laser. These experiments were conducted successfully using different cell types (L929, PtK, kidney cells, acinus cells).

The coupling of a so-called "multi trap", which represents an optical tweezers guiding one or several laser beams onto several objects to fix them makes possible experiments to deform not only adjacent cells (simultaneous stimulation of several cells or one cell at several spots) but cells in suspension as well. Such a multi-beam-tweezers can be realized by directing a beam by means of a scanner mirror alternating on several objects with high frequency. Thus, the objects stay fixed even if the laser beam does not irradiate the corresponding object permanently.

Besides the possibility to investigate the mechanical behavior of cells at the sub-cellular level the advantages of the method are the easy handling, working under constant microscopic control and the possibility to combine it with other microscopic techniques (DIC=Differential Interference Contrast Microscopy, fluorescence, confocal microscopy). Thereby working on light impermeable materials and investigating important biochemical parameters (e.g. intracellular calcium) as well as the behavior of deformation simultaneously are made possible.

### Examples and perspectives of application:

As important information on the structure of the cytoskeleton and of the cortical actin in particular can be gained from the determination of visco-elastic properties, the method is of great practical importance in the research and diagnosis of diseases which are linked to abnormalities of the cytoskeleton. For example, cancer cells are deformed much more easily than non-malignant cells (Ward et al., 1991). Additionally, the method can be used in investigations of various drugs (e.g. pharmaceuticals with regard to their influence on the cytoskeleton).

As the method allows working on light-impermeable surfaces, the research on biomaterials represents another field of application. Here, mechanical cellular parameters yield information on the biocompatibility of materials (e.g. ceramics) relevant in medicine or dental medicine which are being used as cellular carriers.

The application of the method is of great significance in the research of the role of kidney epithelial cells, called podocytes, in the genesis of kidney diseases. The podocytes possess a contractile system that resists to the widening of the capillaries e.g. in the course of a glomerular hypertonia (a disorder substantially accounting for chronic kidney failure). The molecular changes of the podocytes in the course of a glomerular hypertonia are mostly unknown (Endlich, N., Sunohara, M., Nietfeld W., Wolski E. W., Schiwek D., Kranzli Gretz N., Kritz W., Eikhoff H., Endlich K. [2002] Analysis of differential gene expression in stretched podocyt osteopontin enhances adaptation of podocytes to mechanical stress. FASEB J. 16, 1850-1852). Within the framework of this difficulty, information on the single cell level can be gained by the method.

Other features of the invention result incidentally from the description and from the claims.

### BRIEF DESCRIPTION OF THE DRAWINGS

Examples of performances of the invention are explained in more detail as follows from the figures.
- Fig. 1: shows a sample with carrier and source of the laser light in a perspective view.
- Fig. 2: is a schematic as in Fig. 1, but at another adjustment of the source of the laser light.
- Fig. 3: shows a view from above of a coupling unit for a multi beam tweezer.
- Fig. 4: shows the coupling unit, as in Fig. 3, in perspective depiction.

### DETAILED DESCRIPTION OF THE INVENTION

An adherent biological cell 11 sticks on a carrier cover slip 10. An erythrocyte 12 adheres to the biological cell. The erythrocyte=s biconcave form is clearly visible. The erythrocyte lies on the side near the nucleus 13 upon the cell 11.

Beyond a cover slip 10 - on a spot turned away from the cell 11 - a source of laser light is aligned as a so-called optical tweezers. The devices to focus and direct the beam are not illustrated in detail. A focus 15 of a laser beam is a little bit beyond the erythrocyte 12 due to the alignment of the source of the laser light planned here. The optically induced forces are the reason for the erythrocyte 12 to be pulled towards the focus 15. That way the erythrocyte pushes onto the cell 11 and deforms the latter within this area. The deformation of cell 11 is measured via an optical recording and image analysis not shown here or in any other way, and can yield valuable hints regarding the properties and the state of the cell 11 at least in the broader sense.

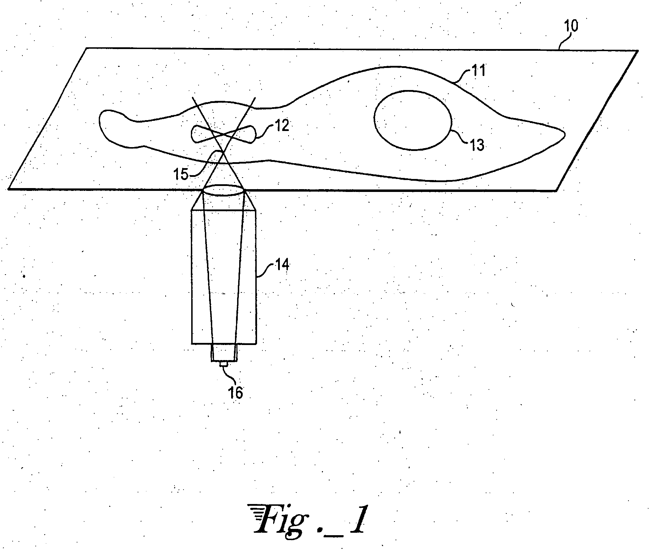

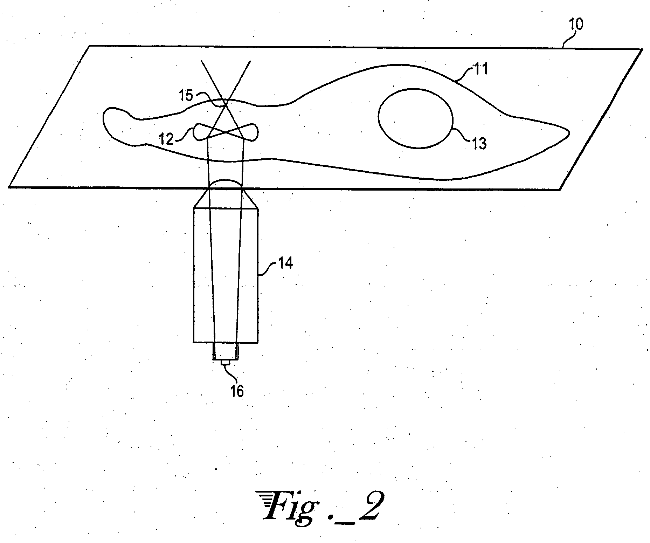

Fig. 2 shows a variation compared to Fig. 1 in that the focus 15 is beyond the erythrocyte 12. Again, the erythrocyte 12 is pulled in the direction of the focus 15. As a result, a deformation of the cell 11 caused by pulling happens which is due to the adhesion of the erythrocyte 12 to cell 11. Here, the strength of the adhesion of cell 11 to the erythrocyte 12 is especially important.

The change in the location of the focus 15 relative to the erythrocyte 12 can be adjusted by changing the position of the source of the laser light 14 and/or of the cover slip 10. Furthermore, the focus may possibly be altered by influencing optically within the area of the source of laser light 14. A movement of the cover slip 10 via suitable three dimensional motors is preferred.

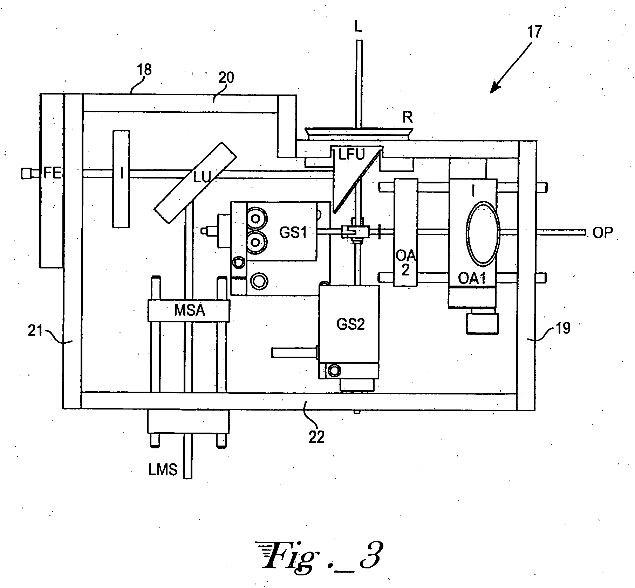

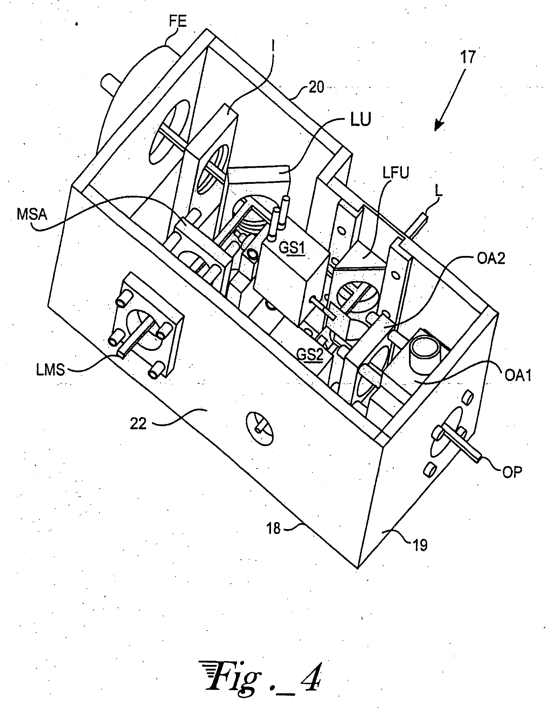

Fig. 3 shows a coupling unit 17, here in the function of a special optical tweezers possessing some additional functions compared to a normal optical tweezers. The essential elements of the coupling unit 17 are aligned in a case 18 that is represented as being open in Figs. 3 and 4.

In the area of a small end wall 19 an entrance for a laser beam OP (a conventional optical tweezers) is planned. The laser beam passes an optical system consisting of two lenses (or a system of lenses) OA1 und OA2 to diverge the laser beam. The second lens OA2 is followed by a system consisting of galvanic mirrors GS1 und GS2. These galvanic mirrors deflect the laser beam by about 90E, at the same time they are able to split it up resulting in a multi-beam tweezers. When such a multi-beam tweezers is applied, several erythrocytes and/or erythrocytes and cells may be held simultaneously or may be manipulated by optically induced forces.

The deflected laser beam exits the case 18 in the area of a larger side wall 20 (laser beam L). In the exit area a ring flange R to connect the coupling unit 17 to a microscope not shown here is planned.
After the laser beam has been deflected by the galvanic mirrors GS1, GS2 and before its exit out of case 18, a coupling of fluorescence activating light and/or a second laser beam is planned. The coupling is aligned by the deflecting mirror LFU.

At a small end wall 21 on the outside, opposite the end wall 19, an HBO-coupling unit (mercury steam light) is aligned to be used for fluorescence microscopy. Unit FE may consist of another laser to activate fluorescence. The light of unit FE enters the case 18 opposite, in parallel to laser beam OP but shifted laterally to it and hits the deflecting mirror LFU. That is, the laser beam L contains the fluorescence activating light and the beam of the optical tweezers. Between the unit FE and the deflecting mirror LFU, an aperture I or a filter to activate fluorescence may be aligned within the case 18 or on its outside.

A second laser beam LMS, a laser micro beam in particular and preferably a pulsed laser, can be coupled into the beams described. The case offers an entrance for the laser micro beam LMS in the area of a side wall 22 opposite the side wall 20 which is aligned in parallel and in lateral distance to the laser. A system of expanding lenses MSA for the laser micro beam LMS is aligned within the case 18.

The laser beam LMS is directed along an optical axis of the light originating from the unit FE towards the deflecting mirror LFU. A deflecting mirror LU is aligned in the beam of light of unit FE reflecting the laser micro beam LMS (following expanding) towards the deflecting mirror LFU.

Due to the alignment of the single units and elements described herein the coupling unit 17 is extremely compact and economically spaced.

## Claims

1. A sample for manipulation by an optical tweezers, comprising one or more target objects and one or more auxiliary objects, at least one auxiliary object being linked to at least one target object, wherein the at least one auxiliary object includes chromophores.

2. The sample of claim 1 wherein said one or more auxiliary objects includes a haemoglobin like protein body and/or muscle haemoglobin, especially myoglobin.

3. The sample of claim 1 or 2 wherein said one or more auxiliary objects has a biconcave form or a round form or a thorn apple form.

4. The sample of one or more of the preceding claims wherein said one or more auxiliary objects is a red blood cell or a chloroplast or a liposome containing chromophores (haemoglobin/haemoglobin derivate/ myoglobin /chlorophyll) or a colloidal polymer microcapsule.

5. The sample of one or more of the preceding claims wherein said one or more auxiliary objects includes a coating comprising a substance, the surface charge of which is opposite the surface charge of the target object.

6. The sample of claim 5 wherein said substance includes positively charged polymers, which do not show any reactive groups.

7. The sample of one or more of the preceding claims wherein said one or more auxiliary objects has a poly-ethyleneimide or poly-L-lysine coating.

8. The sample of one or more of the preceding claims wherein said one or more target objects is fixed on a carrier and said one or more auxiliary objects is fixed on said one or more target objects.

9. A method for producing optically induced mechanical forces on a target object comprising:
providing one or more target objects;
providing one or more auxiliary objects including chromophores;
linking, especially fixing or attaching at least one of the auxiliary objects to at least one of the target objects; and
applying an optical tweezers to said linked auxiliary object wherein manipulation of said at least one of the target objects occurs with the application of the optical tweezers to said linked auxiliary object.

10. The method of claim 9 further comprising coating said one or more auxiliary objects, before linking, with substances which change a surface charge such that the target objects and the auxiliary objects show surface charges with differing signs.

11. The method of claim 9 or 10 wherein said optical tweezers includes one or more optical beams or multiple laser beams.

12. A system (device) for inducing optical forces for manipulating a target object, comprising:
an optical tweezers including a laser beam with a focus;
a microscope having a beam passage; and
a target object aligned with said laser beam, wherein said laser beam and said beam passage are coupled together for manipulating the target object toward said focus.

13. The system (device) of claim 12 further comprising an auxiliary object in said laser beam path linked to said target object, wherein said auxiliary object is manipulated by said coupled beam passage and laser beam toward said focus, manipulating the target object toward said focus.

14. The system (device) of claim 13 wherein said auxiliary object includes chromophores.

15. The system (device) of one or more of claims 12 to 14 wherein said optical tweezers includes multiple laser beams and especially comprising optical elements forming the multiple laser beams.

16. The system (device) of one or more of claims 12 to 15 wherein said laser beam is coupled directly or via a light guide into said beam passage.
